# EUROPÄISCHE PATENTSCHRIFT

(11) **EP 3 116 764 B1**
(45) Veröffentlichungstag und Bekanntmachung des Hinweises auf die Patenterteilung: **07.11.2018**
(21) Anmeldenummer: 15708532.5
(22) Anmeldetag: 10.03.2015
(51) Int. Cl.: B22D 18/00, B22D 25/02, B60R 19/18, B62D 25/08, B62D 29/00

(54) **GEWICHTSREDUZIERENDE OBERFLÄCHENSTRUKTURIERUNG AN BAUTEILEN HERGESTELLT IM GUSSVERFAHREN**
WEIGHT-REDUCING SURFACE STRUCTURING ON COMPONENTS PRODUCED BY A CASTING METHOD
STRUCTURE DE SURFACE DE RÉDUCTION DE POIDS SUR DES COMPOSANTS FABRIQUÉS DANS UN PROCÉDÉ DE COULÉE

(30) Priorität: 12.03.2014 DE 102014204563
(43) Veröffentlichungstag der Anmeldung: 18.01.2017
(73) Patentinhaber: Bayerische Motoren Werke Aktiengesellschaft, 80809 München (DE)
(72) Erfinder: HASLAUER, Christian, 85354 Freising (DE)
(86) Internationale Anmeldenummer: PCT/EP2015/054888
(87) Internationale Veröffentlichungsnummer: WO 2015/135897

(56) Entgegenhaltungen:
- EP-A1- 1 840 010
- DE-A1-102006 008 667
- DE-A1-102007 006 031
- DE-A1-102009 034 907
- DE-A1-102009 040 322
- DE-A1-102010 055 954
- DE-B1- 2 325 144
- DE-T2- 60 015 683
- DE-T2- 69 911 601
- US-A1- 2009 175 006

## Beschreibung

Die Erfindung betrifft ein Gussbauteil, insbesondere für ein Fahrzeug, wobei an wenigstens einem Wandabschnitt des Gussbauteils eine eine Oberfläche des Wandabschnitts bildende, den Wandabschnitt versteifende Oberflächenstrukturierung angeordnet ist.

Aus der DE 2325144 B1 sind Aufspannkörperteile zum Aufspannen einer Spulenhülse bekannt. Das Aufspannkörperteil weist einen wabenförmig ausgebildeten Mantelkörper auf. Die Waben des Mantelkörpers weisen mehrere, gleichförmig ausgebildete, miteinander verbundene Stege auf, die beabstandet voneinander angeordnet sind. Als nächster Stand der Technik wird das Dokument DE102009040322 angesehen. Das Dokument zeigt eine Federstütze einer Fahrzeugkarosse, die als Gussbauteil hergestellt ist und eine durch mehrere Rippen ausgebildete Struktur auf seiner Oberfläche enthält, zwischen denen Flächen ähnlicher Formen angeordnet sind,-wobei sich die Materialhöhe unter diesen Flächen gegenüber derjenigen unter den Rippenrücken auch als verjüngt messen lässt.

Des Weiteren betrifft die Erfindung ein Verfahren zum Herstellen eines Gussbauteils, insbesondere für ein Fahrzeug, unter Verwendung eines Gussverfahrens, wobei an wenigstens einem Wandabschnitt des Gussbauteils eine eine Oberfläche des Wandabschnitts bildende, den Wandabschnitt versteifende Oberflächenstrukturierung ausgebildet wird.

Es ist bekannt, Bauteile, insbesondere in der Automobilindustrie, unter Verwendung eines Gussverfahrens oder eines Tiefziehverfahrens herzustellen. Gussverfahren haben gegenüber Tiefziehverfahren den Vorteil, dass sich komplexere Bauteilgeometrien realisieren lassen.

Mittels eines Gussverfahrens hergestellte Gussbauteile weisen üblicherweise eine einheitliche Wandstärke auf und sind mit einer ebenen oder abgerundeten Oberfläche versehen. Die Wandstärke eines Gussbauteils sowie die Formgebung und Dimensionierung des Gussbauteils definieren das Volumen und folglich das Gewicht des Gussbauteils.

Eine eben ausgebildete Oberfläche eines Gussbauteiles kann eine Schwingungsmembran ausbilden. Ist ein solches Gussbauteil in ein Fahrzeug eingebunden, können durch die als Schwingungsmembran ausgebildete Oberfläche des Gussbauteils Schallwellen in das Fahrzeuginnere geleitet werden. In das Fahrzeuginnere über entsprechende Gussbauteile eingeleitete Schallwellen wirken insbesondere störend auf Fahrzeuginsassen, so dass durch Gussbauteile mit ebenen Oberflächen die Fahrzeugakustik verschlechtert wird.

Aufgabe der Erfindung ist es, ein Gussbauteil bereitzustellen, welches zumindest unter Beibehaltung von Steifigkeits- und Akustikeigenschaften herkömmlicher Gussbauteile im Vergleich zu herkömmlichen Gussbauteilen ein geringeres Gewicht aufweist und kostengünstiger herstellbar ist.

Diese Aufgabe wird durch ein Gussbauteil gemäß Patentanspruch 1 und ein Verfahren gemäß Patentanspruch 5 gelöst. Vorteilhafte Ausgestaltungen sind in den Unteransprüchen wiedergegeben, welche jeweils für sich genommen oder in verschiedener Kombinationen miteinander einen Aspekt der Erfindung darstellen können.

Erfindungsgemäß wird ein Gussbauteil, insbesondere für ein Fahrzeug, vorgeschlagen, wobei an wenigstens einem Wandabschnitt des Gussbauteils eine eine Oberfläche des Wandabschnitts bildende, den Wandabschnitt versteifende Oberflächenstrukturierung angeordnet ist, dadurch gekennzeichnet, dass die Oberflächenstrukturierung durch mehrere gleichförmig ausgebildete, unter Belassung von miteinander verbundenen Stegen beabstandet voneinander angeordnete, Materialverjüngungen an dem Wandabschnitt ausbildende Vertiefungen in der Oberfläche des Wandabschnitts gebildet ist.

Der Wandabschnitt des erfindungsgemäßen Gussbauteils weist wegen der versteifenden Oberflächenstrukturierung trotz der dadurch ausgebildeten Materialverjüngungen Steifigkeitseigenschaften auf, welche zumindest den Steifigkeitseigenschaften herkömmlicher Gussbauteile entsprechen. Dies wird insbesondere durch die Ausbildung der miteinander verbundenen Stege zwischen benachbart zueinander angeordneten Vertiefungen erreicht. Die versteifende Oberflächenstrukturierung bewirkt, dass in den Wandabschnitt bzw. das Gussbauteil Kräfte eingeleitet werden können, ohne dass der Wandabschnitt bzw. das Gussbauteil hierdurch verformt wird.

Die zwischen den Vertiefungen ausgebildeten Stege durchkreuzen die Oberfläche des Wandabschnitts, so dass der Wandabschnitt keine ebene Oberfläche aufweist. Hierdurch wird verhindert, dass durch den Wandabschnitt eine Schwingungsmembran ausgebildet wird, was mit den oben genannten nachteiligen akustischen Effekten verbunden wäre. Folglich weist das erfindungsgemäße Gussbauteil bessere akustische Eigenschaften als herkömmliche Gussbauteile mit ebenen Oberflächen auf.

Durch die durch die Vertiefungen an dem Wandabschnitt ausgebildeten Materialverjüngungen kann das erfindungsgemäße Gussbauteil unter Verwendung einer geringeren Materialmenge hergestellt werden und weist somit ein geringeres Gewicht als herkömmliche Gussbauteile auf. Würde hingegen die Materialstärke eines herkömmlichen Gussbauteils einheitlich verjüngt, würde dies mit schlechteren Steifigkeitseigenschaften und mit einer schlechten akustischen Dämmwirkung des herkömmlichen Gussbauteils einhergehen. Das erfindungsgemäße Gussbauteil ist somit bezüglich seines Gewichtes optimiert und ist aufgrund seiner Herstellung unter geringerem Materialaufwand kostengünstiger als herkömmliche Gussbauteile herstellbar.

Das Gussbauteil kann auch zwei oder mehrere entsprechend mit einer versteifenden Oberflächenstrukturierung versehene Wandabschnitte aufweisen. Auch kann das Gussbauteil vollständig mit einer entsprechenden versteifenden Oberflächenstrukturierung versehen sein.

Das Gussbauteil kann als Fahrzeugbauteil, insbesondere als Federstütze zur Anbindung einer Feder und eines Stoßdämpfers an eine Fahrzeugkarosserie, ausgebildet sein.

Gemäß einer vorteilhaften Ausgestaltung sind die Vertiefungen in einer Draufsicht auf die Oberfläche des Wandabschnitts polygonal oder rund ausgebildet. Hierdurch werden der versteifenden Oberflächenstrukturierung sehr gute Steifigkeitseigenschaften verliehen. Eine rund ausgebildete Vertiefung kann kreisrund, elliptisch oder oval ausgebildet sein.

Nach einer weiteren vorteilhaften Ausgestaltung sind die Vertiefungen in einer Draufsicht auf die Oberfläche des Wandabschnitts hexagonal ausgebildet und bilden eine Wabenstruktur aus. Eine solche Wabenstruktur ist bekanntermaßen mit sehr guten Steifigkeitseigenschaften versehen und weist ein sehr gutes Verhältnis von Wandmaterial zu Vertiefungsvolumen auf, was mit einer maximalen Gewichtsreduzierung bezüglich des Gussbauteils verbunden ist.

Vorteilhafterweise ist das Gussbauteil aus Aluminium gebildet. Auch hierdurch kann das Gewicht des Gussbauteils weiter reduziert werden, was insbesondere bezüglich eines zur Herstellung eines Fahrzeugs verwendeten Gussbauteils von Vorteil ist.

Weiter erfindungsgemäß wird ein Verfahren zum Herstellen eines Gussbauteils, insbesondere für ein Fahrzeug, unter Verwendung eines Gussverfahrens vorgeschlagen, wobei an wenigstens einem Wandabschnitt des Gussbauteils eine eine Oberfläche des Wandabschnitts bildende, den Wandabschnitt versteifende Oberflächenstrukturierung ausgebildet wird, dadurch gekennzeichnet, dass die Oberflächenstrukturierung durch mehrere gleichförmig ausgebildete, unter Belassung von miteinander verbundenen Stegen beabstandet voneinander angeordnete, Materialverjüngungen an dem Wandabschnitt ausbildende Vertiefungen in der Oberfläche des Wandabschnitts gebildet wird.

Mit diesem Verfahren sind die oben mit Bezug auf das Gussbauteil genannten Vorteile entsprechend verbunden.

Gemäß einer vorteilhaften Ausgestaltung werden die Vertiefungen in einer Draufsicht auf die Oberfläche des Wandabschnitts polygonal oder rund ausgebildet. Mit dieser Ausgestaltung sind die oben mit Bezug auf die entsprechende Ausgestaltung des Gussbauteils genannten Vorteile und Ausführungsformen entsprechend verbunden.

Nach einer weiteren vorteilhaften Ausgestaltung werden die Vertiefungen in einer Draufsicht auf die Oberfläche des Wandabschnitts hexagonal ausgebildet. Mit dieser Ausgestaltung sind die oben mit Bezug auf die entsprechende Ausgestaltung des Gussbauteils genannten Vorteile entsprechend verbunden.

Eine weitere vorteilhafte Ausgestaltung sieht vor, dass das Gussverfahren ein Druckgussverfahren ist. Hierdurch ist eine Massenfertigung erfindungsgemäßer Gussbauteile, insbesondere für die Automobilindustrie, möglich.

Vorteilhafterweise ist das Druckgussverfahren ein Aluminiumdruckgussverfahren. Hierdurch können Gussbauteile aus Aluminium und folglich mit geringem Gewicht gefertigt werden.

Weitere Einzelheiten, Merkmale und Vorteile der Erfindung ergeben sich aus der nachfolgenden Beschreibung und den Figuren. Es zeigen:
- Figur 1: eine perspektivische Darstellung eines in eine Fahrzeugkarosserie eingebundenen herkömmlichen Gussbauteils,
- Figur 2: eine perspektivische Darstellung eines in eine Fahrzeugkarosserie eingebundenen Ausführungsbeispiels für ein erfindungsgemäßes Gussbauteil,
- Figur 3: eine Schnittdarstellung des in Figur 2 gezeigten erfindungsgemäßen Gussbauteils, und
- Figur 4: eine schematische Draufsicht auf ein weiteres Ausführungsbeispiel für ein erfindungsgemäßes Gussbauteil.

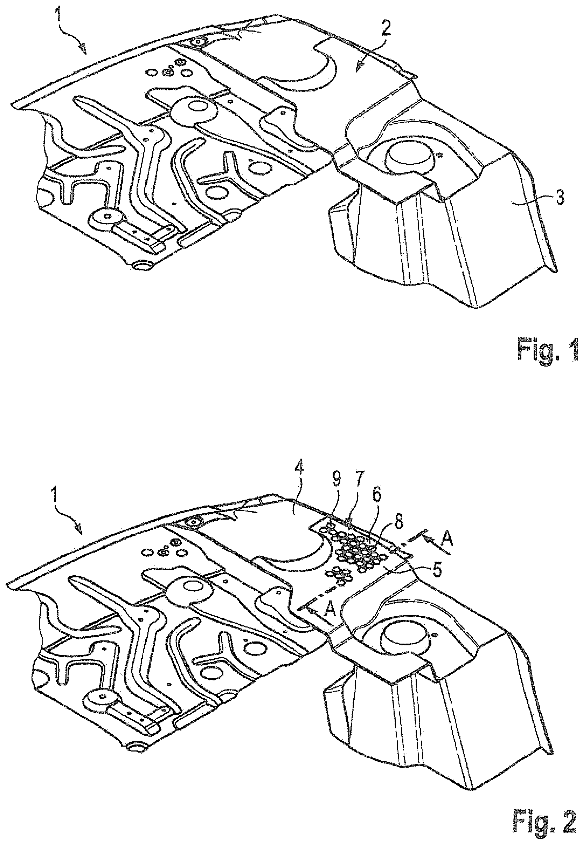

Figur 1 zeigt eine perspektivische Darstellung eines in eine Fahrzeugkarosserie 1 eingebundenen herkömmlichen Gussbauteils 2. Das Gussbauteil 2 ist als Federstütze der Fahrzeugkarosserie 1 ausgebildet. Das Gussbauteil 2 weist einen Wandabschnitt 3 mit gleichbleibender Wandstärke und ebener Oberfläche auf. Dieser ebene Wandabschnitt 3 bildet eine Schwingungsmembran aus, was mit den oben genannten akustischen Nachteilen verbunden ist.

Figur 2 zeigt eine perspektivische Darstellung eines in eine Fahrzeugkarosserie 1 eingebundenen Ausführungsbeispiels für ein erfindungsgemäßes Gussbauteil 4, weiches als Aluminiumdruckgussbauteil ausgebildet ist. An einem Wandabschnitt 5 des Gussbauteils 4, welches herkömmlich mit einer ebenen Oberfläche versehen ist, ist eine die gezeigte Oberfläche 6 des Wandabschnitts 5 bildende, den Wandabschnitt 5 versteifende Oberflächenstrukturierung 7 angeordnet. Die Oberflächenstrukturierung 7 ist durch mehrere gleichförmig ausgebildete, unter Belassung von miteinander verbundenen Stegen 8 beabstandet voneinander angeordnete, Materialverjüngungen an dem Wandabschnitt 5 ausbildende Vertiefungen 9 in der Oberfläche 6 des Wandabschnitts 5 gebildet. Die Vertiefungen 9 sind in einer Draufsicht auf die Oberfläche 6 des Wandabschnitts 5 gleichseitig und hexagonal ausgebildet und bilden eine Wabenstruktur aus.

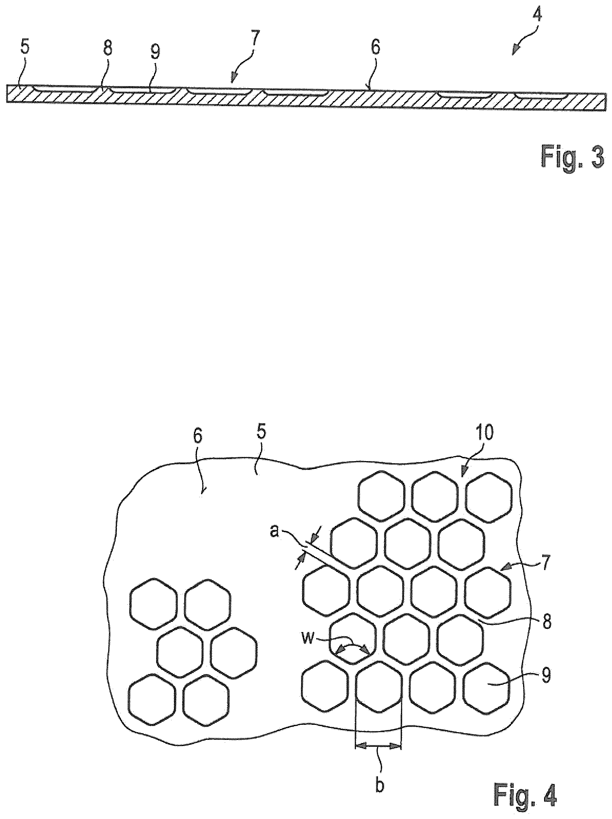

Figur 3 zeigt eine Schnittdarstellung des in Figur 2 gezeigten erfindungsgemäßen Gussbauteils 4 entlang der in Figur 2 gezeigten Schnittlinie A-A. Der Wandabschnitt 5 weist im Bereich der Stege 8 eine beispielhafte Wandstärke von 3 mm und im Bereich der Vertiefungen 9 eine beispielhafte Materialstärke von 2 mm auf. Hierdurch kann je nach Anzahl, Größe und Tiefe der Vertiefungen die Gewichtseinsparung erhöht werden.

Figur 4 zeigt eine schematische Draufsicht auf ein weiteres Ausführungsbeispiel für ein erfindungsgemäßes Gussbauteil 10. Die Vertiefungen 9 sind in der gezeigten Draufsicht auf die Oberfläche 6 des Wandabschnitts 5 des Gussbauteils 10 gleichseitig und hexagonal ausgebildet und bilden eine Wabenstruktur aus. Die Vertiefungsbreite b ist frei skalierbar und kann beispielsweise 20 mm betragen. Die Stegbreite a ist ebenfalls frei skalierbar und kann beispielsweise 3 mm betragen. Der Winkel w beträgt in dem Ausführungsbeispiel 120°.

### Bezugszeichenliste:

- 1: Fahrzeugkarosserie
- 2: Gussbauteil
- 3: Wandabschnitt
- 4: Gussbauteil
- 5: Wandabschnitt
- 6: Oberfläche
- 7: versteifende Oberflächenstrukturierung
- 8: Steg
- 9: Vertiefung
- 10: Gussbauteil
- a: Stegbreite
- b: Vertiefungsbreite
- w: Winkel

## Patentansprüche

1. Fahrzeug mit einer Fahrzeugkarosserie (1), mit einem in die Fahrzeugkarosserie (1), eingebundenen Gussbauteil (4, 10), wobei an wenigstens einem Wandabschnitt (5) des Gussbauteils eine eine Oberfläche (6) des Wandabschnitts (5) bildende, den Wandabschnitt (5) versteifende Oberflächenstrukturierung (7) angeordnet ist, **dadurch gekennzeichnet, dass** das eingebundene Gussbauteil (4, 10) als eine Federstütze der Fahrzeugkarosserie (1) ausgebildet ist, dass die Oberflächenstrukturierung (7) durch mehrere gleichförmig ausgebildete, unter Belassung von miteinander verbundenen Stegen (8) beabstandet voneinander angeordnete, Materialverjüngungen an dem Wandabschnitt (5) ausbildende Vertiefungen (9) in der Oberfläche (6) des Wandabschnitts (5) gebildet ist.

2. Fahrzeug nach Anspruch 1, **dadurch gekennzeichnet, dass** die Vertiefungen (9) in einer Draufsicht auf die Oberfläche (6) des Wandabschnitts (5) polygonal oder rund ausgebildet sind.

3. Fahrzeug nach Anspruch 2, **dadurch gekennzeichnet, dass** die Vertiefungen (9) in einer Draufsicht auf die Oberfläche (6) des Wandabschnitts (5) hexagonal ausgebildet sind und eine Wabenstruktur ausbilden.

4. Fahrzeug nach einem der Ansprüche 1 bis 3, **dadurch gekennzeichnet, dass** das Gussbauteil (4, 10) aus Aluminium gebildet ist.

5. Verfahren zum Herstellen eines Gussbauteils (4, 10) für ein Fahrzeug, unter Verwendung eines Gussverfahrens, wobei an wenigstens einem Wandabschnitt (5) des Gussbauteils (4, 10) eine eine Oberfläche (6) des Wandabschnitts (5) bildende, den Wandabschnitt (5) versteifende Oberflächenstrukturierung (7) ausgebildet wird, **dadurch gekennzeichnet, dass** die Oberflächenstrukturierung (7) durch mehrere gleichförmig ausgebildete, unter Belassung von miteinander verbundenen Stegen (8) beabstandet voneinander angeordnete, Materialverjüngungen an dem Wandabschnitt (5) ausbildende Vertiefungen (9) in der Oberfläche (6) des Wandabschnitts (5) gebildet wird, wobei das hergestellte Gussbauteil (4,10) eine Federstütze der Fahrzeugkarosserie (1) ist.

6. Verfahren nach Anspruch 5, **dadurch gekennzeichnet, dass** die Vertiefungen (9) in einer Draufsicht auf die Oberfläche (6) des Wandabschnitts (5) polygonal oder rund ausgebildet werden.

7. Verfahren nach Anspruch 6, **dadurch gekennzeichnet, dass** die Vertiefungen (9) in einer Draufsicht auf die Oberfläche (6) des Wandabschnitts (5) hexagonal ausgebildet werden.

8. Verfahren nach einem der Ansprüche 5 bis 7, **dadurch gekennzeichnet, dass** das Gussverfahren ein Druckgussverfahren ist.

9. Verfahren nach Anspruch 8, **dadurch gekennzeichnet, dass** das Druckgussverfahren ein Aluminiumdruckgussverfahren ist.

## Claims

1. A vehicle comprising a vehicle body (1), having a cast component (4, 10) integrated into the vehicle body (1), a surface structuring (7) being arranged on at least one wall portion (5) of the cast component, forming a surface (6) of the wall portion (5), and stiffening said wall portion (5), **characterised in that** the integrated cast component (4, 10) is formed as a spring support of the vehicle body (1), and **in that** the surface structuring (7) is formed by a plurality of uniformly shaped depressions (9) in the surface (6) of the wall portion (5), which depressions are arranged at a distance from one another, leaving interconnected webs (8), and produce tapered sections of material on the wall portion (5).

2. A vehicle according to claim 1, **characterised in that**, in a plan view, the depressions (9) are in the form of polygons or circles on the surface (6) of the wall portion (5).

3. A vehicle according to claim 2, **characterised in that**, in a plan view, the depressions (9) are in the form of hexagons on the surface (6) of the wall portion (5) and form a honeycomb structure.

4. A vehicle according to any of claims 1 to 3, **characterised in that** the cast component (4, 10) is made of aluminium.

5. A method for producing a cast component (4, 10) for a vehicle, using a casting process, wherein a surface structuring (7) being formed on at least one wall portion (5) of the cast component (4, 10), forming a surface (6) of the wall portion (5), and stiffening said wall portion (5), **characterised in that** the surface structuring (7) is formed by a plurality of uniformly shaped depressions (9) in the surface (6) of the wall portion (5), which depressions are arranged at a distance from one another, leaving interconnected webs (8), and produce tapered sections of material on the wall portion (5), the cast component (4, 10) produced being a spring support of the vehicle body (1).

6. A method according to claim 5, **characterised in that**, in a plan view, the depressions (9) are in the form of polygons or circles on the surface (6) of the wall portion (5).

7. A method according to claim 6, **characterised in that**, in a plan view, the depressions (9) are in the form of hexagons on the surface (6) of the wall portion (5).

8. A method according to any of claims 5 to 7, **characterised in that** the casting process is a die casting process.

9. A method according to claim 8, **characterised in that** the die casting process is an aluminium die casting process.

## Revendications

1. Véhicule ayant une carrosserie (1) comportant un composant coulé (4, 10) inséré dans cette carrosserie (1), dans lequel, sur au moins un segment de paroi (5) du composant coulé est positionnée une structuration de surface (7) formant une surface (6) du segment de paroi (5) et renforçant ce segment de paroi (5),
**caractérisé en ce que**
le composant coulé inséré (4, 10) est réalisé sous la forme d'un appui élastique de la carrosserie (1) du véhicule, la structuration de surface (7) est formée par plusieurs renfoncements (9), dans la surface (6) du segment de paroi (5), de même forme, disposés à distance les uns des autres en laissant des barrettes (8) liées les unes aux autres, et formant des amincissements de matériau sur le segment de paroi (5).

2. Véhicule conforme à la revendication 1,
**caractérisé en ce qu'**
en vue de dessus sur la surface (6) du segment de paroi (5) les renfoncements (9) ont une forme polygonale ou arrondie.

3. Véhicule conforme à la revendication 2,
**caractérisé en ce qu'**
en vue de dessus sur la surface (6) du segment de paroi (5) les renfoncements (9) sont de forme hexagonale et forment une structure en nid d'abeilles.

4. Véhicule conforme à l'une des revendications 1 à 3,
**caractérisé en ce que**
le composant coulé (4, 10) est réalisé en aluminium.

5. Procédé de fabrication d'un composant coulé (4, 10) destiné à un véhicule en utilisant un procédé de coulée, selon lequel, sur au moins un segment de paroi (5) du composant coulé (4, 10) est formée une structuration de surface (7) formant la surface (6) du segment de paroi (5) et renforçant ce segment (5),
**caractérisé en ce que**
la structuration de surface (7) est formée par plusieurs renfoncements (9) dans la surface (6) du segment de paroi (5), de même forme, situés à distance les uns des autres en laissant des barrettes (8) reliées les unes aux autres, et formant un amincissement de matériau sur le segment de paroi (5), le composant coulé obtenu (4, 10) étant un appui élastique de carrosserie (1) de véhicule.

6. Procédé conforme à la revendication 5,
**caractérisé en ce qu'**
en vue de dessus sur la surface (6) du segment de paroi (5) les renfoncements (9) ont une forme polygonale ou arrondie.

7. Procédé conforme à la revendication 6,
**caractérisé en ce qu'**
en vue de dessus sur la surface (6) du segment de paroi (5) les renfoncements (9) ont une forme hexagonale.

8. Procédé conforme à l'une des revendications 5 à 7,
**caractérisé en ce que**
le procédé de coulée est un procédé de coulée sous pression.

9. Procédé conforme à la revendication 8,
**caractérisé en ce que**
le procédé de coulée sous pression est un procédé de coulée sous pression d'aluminium.
